# EUROPÄISCHE PATENTANMELDUNG

(11) **EP 4 506 811 A1**
(43) Veröffentlichungstag der Anmeldung: **12.02.2025**
(21) Anmeldenummer: 23191113.2
(22) Anmeldetag: 11.08.2023
(51) Int. Cl.: G06F 8/65, G06F 11/14

(54) **VERFAHREN ZUM AKTUALISIEREN EINER SOFTWAREVERSION FÜR EINE STEUERUNGSFUNKTION FÜR EINE SCHALTUNGSANORDNUNG FÜR EINE STEUERUNG EINER MASCHINE MITTELS DER SCHALTUNGSANORDNUNG, COMPUTERPROGRAMMPRODUKT, COMPUTERLESBARES SPEICHERMEDIUM SOWIE SCHALTUNGSANORDNUNGEN**

(71) Anmelder: Siemens Aktiengesellschaft, 80333 München (DE)
(72) Erfinder: Fröhlich, Joachim, 85614 Kirchseeon (DE); Rothbauer, Stefan, 86156 Augsburg (DE); Stückjürgen, Christoph, 80807 München (DE); Zeller, Marc, 81243 München (DE)
(74) Vertreter: Siemens Patent Attorneys

(57) **Zusammenfassung**

Die Erfindung betrifft Verfahren zum Aktualisieren einer Softwareversion für eine Steuerungsfunktion (24) für eine Schaltungsanordnung (16) für eine Steuerung einer Maschine (12), mit den Schritten: Empfangen eines Datenpakets zum Aktualisieren der Softwareversion; Speichern des Datenpakets in einer ersten Speichereinrichtung (56) und Speichern des Datenpakets in einer zweiten Speichereinrichtung (58); Erweitern der ersten elektronischen Recheneinrichtung (18) mit einem weiteren externen Datensensor (60) und Erweitern der zweiten elektronischen Recheneirichtung (28) mit einem nochmals weiteren externen Datensensor (62);
- Freigeben der Softwareversion zum Aktualisieren mittels des Weiteren externen Datensensors (60) und des nochmals weiteren Datensensors (62);
- Aktualisieren der Softwareversion auf der zweiten elektronischen Recheneinrichtung (28); und
- Aktualisieren der Softwareversion auf der ersten elektronischen Recheneinrichtung (18).Ferner betrifft die Erfindung ein Computerprogrammproduckt, ein computerlesbares Speichermedium und eine Schaltungsanordnung (16).

## Beschreibung

Die Erfindung betrifft ein Verfahren zum Aktualisieren einer Softwareversion für eine Steuerungsfunktion für eine Schaltungsanordnung für eine Steuerung einer Maschine mittels der Schaltungsanordnung gemäß dem geltenden Patentanspruch 1. Ferner betrifft die Erfindung ein Computerprogrammprodukt, ein entsprechendes computerlesbares Speichermedium sowie eine Schaltungsanordnung.

Um sicherheitskritische Automatisierungsaufgaben auszuführen, die eine kontinuierliche Überwachung und Steuerung erfordern, muss eine Automatisierungssoftware zuverlässig ausgeführt werden. Es muss jederzeit gewährleistet sein, dass in einem Fehlerfall ein sicherer Systemzustand erreicht werden kann, zum Beispiel ein Notstopp einer Maschine oder ein Wiederanlaufpunkt ohne Unterbrechung des gesteuerten Prozesses. Auch wird zu diesem Zweck in der Regel dedizierte Hardware, zum Beispiel ein ausfallsicheres SPS, und Software für fehlertolerante Systeme verwendet. Aus Sicherheitsgründen können sicherheitskritische Automatisierungsaufgaben im Stand der Technik nicht auf handelsüblicher Standard Industrie Hardware ausgeführt werden.

Aufgabe der vorliegenden Erfindung ist es, ein Verfahren, ein Computerprogrammprodukt, ein computerlesbares Speichermedium sowie eine Schaltungsanordnung zu schaffen, mittels welcher aufwandsreduziert eine Softwareversion für eine Steuerungsfunktion für die Schaltungsanordnung aktualisiert werden kann.

Diese Aufgabe wird durch ein Verfahren, ein Computerprogrammprodukt, ein computerlesbares Speichermedium sowie durch eine Schaltungsanordnung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Aktualisieren einer Softwareversion für eine Steuerungsfunktion für eine Schaltungsanordnung für eine Steuerung einer Maschine mittels der Schaltungsanordnung. Es erfolgt das Empfangen eines Datenpakets zum Aktualisieren der Softwareversion mittels einer Empfangseinrichtung der Schaltungsanordnung. Es wird das Datenpaket in einer ersten Speichereinrichtung einer ersten elektronischen Recheneinrichtung der Schaltungsanordnung gespeichert und es erfolgt das Speichern des Datenpakets in einer zweiten Speichereinrichtung einer zweiten elektronischen Recheneinrichtung der Schaltungsanordnung. Es erfolgt das Erweitern der ersten elektronischen Recheneinrichtung mit einem weiteren externen Datensensor und Erweitern der zweiten elektronischen Recheneirichtung mit einem nochmals weiteren externen Datensensor und das Freigeben der Softwareversion zum Aktualisieren mittels des Weiteren externen Datensensors und des nochmals weiteren externen Datensensors. Es wird die Softwareversion auf der zweiten elektronischen Recheneinrichtung in Abhängigkeit von der Freigabe des nochmals weiteren externen Datensensors aktualisiert. Es wird die Softwareversion, insbesondere zeitlich darauffolgend, auf der ersten elektronischen Recheneinrichtung in Abhängigkeit von der Freigabe des weiteren Datensensors aktualisiert.

Somit ist es ermöglicht, dass beispielsweise auf einfachen elektronischen Recheneinrichtungen zuverlässig die Softwareversion aktualisiert werden kann, ohne dass dabei die Steuerung der Maschine beeinträchtigt ist. Insbesondere ist während der gesamten Aktualisierungsphase der Softwareversion die Steuerung der Maschine gewährleistet bzw. zumindest eine Notfunktion für die Maschine bereitgestellt, so dass in einem Fehlerfall ein sicherer Systemzustand erreicht werden kann. Insbesondere ist die erste elektronische Recheneinrichtung und die zweite elektronische Recheneinrichtung gleich, jedoch separat zueinander ausgebildet.

Dadurch können insbesondere sicherheitsrelevante Steuerungsfunktionen auch auf handelsüblicher Standardhardware (COTS - Components-off-the-shelf), insbesondere Standard Industrie Hardware, ausgeführt werden können.

Insbesondere ermöglicht somit die Schaltungsanordnung die Nutzung hochverfügbarer und/oder sicherheitskritischer Steuerungssysteme. Eine Besonderheit dieses Ansatzes ist es dabei, dass keine dedizierte Spezialhardware für eine ausfallsichere SPS benötigt wird (Speicherprogrammierbare Steuerung). Vielmehr kann Standard Industrie Hardware als elektronische Recheneinrichtung für die Ausführung sicherheitsrelevanter Steuerungsfunktionen verwendet werden, die entsprechend aufgerüstet werden, ohne dass die Steuerungsfunktion, geschweige denn das enthaltene Steuerungssystem, angehalten werden muss.

Zu diesem Zweck wird beispielsweise eine Steuerungsfunktion von zwei, insbesondere analogen, Steuerungsfunktionsinstanzen, die auf jeweiligen Rechenknoten/elektronische Recheneinrichtungen eingesetzt und ausgeführt werden, eingesetzt und ausgeführt. Da es sich um zwei Instanzen einer Steuerungsfunktion handelt, verhalten sich die beiden elektronischen Recheneinrichtungen identisch, wenn alles andere unverändert bleibt.

Für die Implementierung der Rechenknoten beziehungsweise der elektronischen Recheneinrichtung können zwei vergleichsweise günstige Standard Industrie Hardware mit handelsüblicher Hardware und Software verwendet werden. Externe Datensensoren sind mit internen Datensensoren und insbesondere auch mit den entsprechenden elektronischen Recheneinrichtungen verschränkt. Diese Datensensoren bilden das Rückgrat der Schaltungsanordnung mit zwei redundanten Sicherheitsverbindungen zur Steuerung der Sicherheitseinrichtung. Die Schaltungsanordnung erkennt und behandelt ausfallende oder fehlerhafte Prozesse, Prozesskommunikationsverbindungen und Rechenknoten.

Die Schaltungsanordnung ist dabei insbesondere voll funktionsfähig, um den Lebenszyklus der sicherheitsrelevanten Steuerungsinstanz vollständig abzudecken, einschließlich von Upgrades und Downgrades der Steuerungsfunktion mit internen Datensensoren und der externen Datensensoren. Im Normalfall überdauert die Schaltungsanordnung die Steuerungsfunktionsinstanzen, das heißt die Schaltungsanordnung vor und nach den Steuerungsfunktionsinstanzen ist bevorzugt weiterhin betriebsbereit.

Insbesondere ist somit vorgesehen, dass sicherheitsrelevante Steuerungsfunktionen durch die Ausführung mittels preiswerter Hardware, zum Beispiel industrieller Standardhardware, statt auf dedizierter, vergleichsweise teurer Hardware, wie zum Beispiel einer ausfallsicheren SPS, durchgeführt werden können. Ferner sind die SPS schwer zu erhalten, wodurch eine schnellere Bereitstellung der Schaltungsanordnung realisiert werden kann. Die redundanten externen Datensensoren, die in getrennten Prozessen auf redundanter Standard Industrie Hardware laufen, die sich von der Hardware unterscheidet, auf der die überwachte, sicherheitsrelevante Steuerungsfunktion läuft, implementieren somit ein unabhängiges Netz auf kosteneffiziente Weise.

Ferner ermöglicht die Schaltungsanordnung ein nahtloses Upgrade von hochverfügbaren, sicherheitsrelevanten Steuerungsfunktionen auf Standard Industrie Hardware. Insbesondere ermöglicht somit die Erfindung die nahtlose Aufrüstung von hochverfügbaren, sicherheitsrelevanten Steuerungsfunktionen. Es können parallele Substitutionen, insbesondere Upgrades oder Downgrades, von redundanten Steuerungsfunktionsinstanzen auf den zwei elektronischen Recheneinrichtungen durchgeführt werden. Insbesondere ist sichergestellt, dass zu jeder Zeit, auch während einer Aktualisierung von Steuerungsfunktionen im laufenden Betrieb, eine sichere Systemreaktion gewährleistet werden kann.

Gemäß einer vorteilhaften Ausgestaltungsform ist die erste elektronische Recheneinrichtung als Primärsteuerungseinrichtung für die Maschine bereitgestellt. Insbesondere ist somit eine entsprechende Kommunikation zwischen der ersten elektronischen Recheneinrichtung und der Maschine aktiv. Eine Verbindung zwischen der zweiten elektronischen Recheneinrichtung und der Maschine kann als inaktiv betrachtet werden. Insbesondere ist somit vorgesehen, dass die Steuerung der Maschine über die erste elektronische Recheneinrichtung durchgeführt wird. Die Schaltungsanordnung ist dazu ausgebildet, sollte beispielsweise ein Fehlerfall in der ersten elektronischen Recheneinrichtung zu verzeichnen sein, dass dann wiederum die Verbindung zwischen der ersten elektronischen Recheneinrichtung und der Maschine inaktiv geschaltet wird und die Steuerungsfunktion über die zweite elektronische Recheneinrichtung durchgeführt wird. Insbesondere kann somit ein redundantes System für die Maschine geschaffen werden, und die Ausfallwahrscheinlichkeit der Maschine reduziert werden.

Es hat sich weiterhin als vorteilhaft erwiesen, wenn während der Aktualisierung der ersten elektronischen Recheneinrichtung die Steuerung der Maschine weiterhin von der ersten elektronischen Recheneinrichtung durchgeführt wird. Somit erfolgt die Steuerung der Maschine auch weiterhin mittels der ersten elektronischen Recheneinrichtung. Es kann dennoch aufgrund des spezifischen Aufbaus der Schaltungsanordnung eine Softwareaktualisierung auf der ersten elektronischen Recheneinrichtung durchgeführt werden, ohne den Betrieb der Maschine zu beeinträchtigen und gleichzeitig auch in einem Fehlerfall dennoch eine Notsteuerung bereitzustellen. Somit kann ein sicherer Betrieb der Maschine realisiert werden.

Es hat sich weiterhin als vorteilhaft erwiesen, wenn in einem Fehlerfall der ersten elektronischen Recheneinrichtung die Steuerung der Maschine mittels der zweiten elektronischen Recheneinrichtung durchgeführt wird. Die zweite elektronische Recheneinrichtung dient somit als Rückfallebene, sollte ein Fehler detektiert werden. Somit kann im Fehlerfall die Steuerungsfunktion auch über die zweite elektronische Recheneinrichtung übernommen werden, wodurch ein sicherer Betrieb der Maschine realisiert werden kann.

Es hat sich weiterhin als vorteilhaft erwiesen, wenn zeitlich vor dem Aktualisieren des Datenpakets mittels einem jeweiligen Datensensor von der ersten elektronischen Recheneinrichtung und/oder der zweiten elektronischen Recheneinrichtung das Datenpaket überprüft wird. Insbesondere werden somit vor der Aktualisierung über die Schaltungseinrichtung sogenannte Vorab-Aktivierungstests an den redundanten elektronischen Recheneinrichtungen bezüglich der neuen Version durchgeführt. Im Falle eines fehlgeschlagenen Upgrades ist beispielsweise die aktuelle Version der Steuerungsfunktion weiterhin verfügbar und bereit, die Steuerung sofort zu übernehmen. Bei diesen Tests vor der Aktivierung handelt es sich insbesondere um grundlegende Prüfungen, z. B., ob Installationen und Einrichtungen korrekt durchgeführt wurden, ob die für eine Steuerungsfunktionsversion erforderlichen Komponenten, insbesondere andere Steuerungsfunktionen und Kommunikationsverbindungen, vorhanden sind und, wie erwartet, funktionieren und ob die Eingänge der Steuerungsfunktionen die erwarteten Eigenschaften aufweisen. Die Testergebnisse vor der Aktivierung beider redundanter Steuerungsfunktionsinstanzen müssen dabei insbesondere gleich sein, bevor eine neue Steuerungsfunktionsversion, welche insbesondere der Softwareversion entspricht, aktiviert werden kann, d. h., bevor eine ihrer redundanten Steuerungsfunktionsinstanzen zur neuen Primären werden kann. Nach erfolgreichen Voraktivierungstests erfolgt dann ein durchgängiges, fließendes Upgrade einer redundanten ausgelegten Steuerungsfunktion. Somit kann bereits vor der eigentlichen Aktualisierung überprüft werden, ob entsprechende Fehler bei der Aktualisierung auftreten können. Dies reduziert die Ausfallwahrscheinlichkeit der Maschine.

Ebenfalls vorteilhaft ist, wenn nach dem Aktualisieren der Softwareversion die zuvor installierte Softwareversion von der ersten elektronischen Recheneinrichtung und/oder zweiten elektronischen Recheneinrichtung gelöscht wird. Optional kann es sich bei der Softwareversion auch um eine Aktualisierung der Datensensoren und/oder von Testprogrammen handeln. Dies hat beispielsweise den Vorteil, dass Speicherplatz freigegeben werden kann für eine zukünftige Softwareversion. Somit kann Speicherbedarf reduziert werden.

Eine weitere vorteilhafte Ausgestaltungsform sieht vor, dass nach dem Aktualisieren der Softwareversion die zuvor installierte Softwareversion als Rückfallversion von der ersten elektronischen Recheneinrichtung und/oder zweiten elektronischen Recheneinrichtung gespeichert wird. Insbesondere wird somit die zuvor installierte Softwareversion weiterhin gespeichert. Sollte es zu Problemen mit der neuen Softwareversion bzw. aktualisierten Softwareversion kommen, so kann auf die funktionstüchtige zuvor installierte Version zurückgegriffen werden. Somit können Systemausfälle der Maschine verhindert werden.

Ebenfalls vorteilhaft ist, wenn während der Software-Aktualisierung der zweiten elektronischen Recheneinrichtung eine erste Steuerungsfunktion zum Steuern der Maschine mittels eines internen ersten Datensensors der ersten elektronischen Recheneinrichtung und mittels eines externen ersten Datensensors der zweiten elektronischen Recheneinrichtung überwacht wird. Somit ist es ermöglicht, dass auf unabhängigen elektronischen Recheneinrichtungen eine jeweilige Überprüfung der anderen elektronischen Recheneinrichtung durchgeführt wird. Dies verhindert, dass beispielsweise bei einem Ausfall einer gesamten elektronischen Recheneinrichtung ein Ausfall der Steuerungsfunktion für die Maschine zu verzeichnen ist. Somit kann eine Überwachung der elektronischen Recheneinrichtung auch während des Aktualisierungsvorgangs realisiert werden.

Ferner hat es sich als vorteilhaft erwiesen, wenn während der Software-Aktualisierung der ersten elektronischen Recheneinrichtung eine zweite Steuerungsfunktion zum Steuern der Maschine mittels eines internen zweiten Datensensors der zweiten elektronischen Recheneinrichtung und mittels eines externen zweiten Datensensors der ersten elektronischen Recheneinrichtung überwacht wird. Somit ist es ermöglicht, dass auf unabhängigen elektronischen Recheneinrichtungen eine jeweilige Überprüfung der anderen elektronischen Recheneinrichtung durchgeführt wird. Dies verhindert, dass beispielsweise bei einem Ausfall einer gesamten elektronischen Recheneinrichtung ein Ausfall der Steuerungsfunktion für die Maschine zu verzeichnen ist. Somit kann eine Überwachung der elektronischen Recheneinrichtung auch während des Aktualisierungsvorgangs realisiert werden

Ebenfalls vorteilhaft ist, wenn der externe erste Datensensor und der externe zweite Datensensor über eine Kommunikationsverbindung miteinander gekoppelt sind. Insbesondere können somit die elektronischen Recheneinrichtungen beispielsweise ihre Steuerungsfunktionen austauschen. Insbesondere kann somit eine Systemsteuerungslogik in den einzelnen elektronischen Recheneinrichtungen mit aktivierter Steuerungsfunktionskoordinationsverbindung realisiert werden. Somit kann ein zuverlässiger Betrieb der Maschine realisiert werden.

Eine weitere vorteilhafte Ausgestaltungsform sieht vor, dass die erste elektronische Recheneinrichtung und die zweite elektronische Recheneinrichtung über eine weitere Kommunikationsverbindung miteinander gekoppelt sind. Insbesondere können somit die externen Datensensoren ihre Systemansichten vergleichen und Systeminkonsistenzen oder Komponentenausfälle bei Ausfall der Datensensoren und/oder ausfallenden Kommunikationsverbindungen erkennen. im Fall eines drohenden Schadens, wenn beispielsweise die primäre Steuerungsfunktion der ersten elektronischen Recheneinrichtung nicht ordnungsgemäß reagiert, kann die Schaltungsanordnung auf die zweite elektronische Recheneinrichtung umschalten oder als letztes Mittel die entsprechende Sicherheitseinrichtung über die Notverbindung auslösen. Somit kann ein sicherer Betrieb der Maschine realisiert werden.

Ferner hat sich als vorteilhaft erwiesen, wenn eine Notsteuerung für die Maschine mittels einer der Datensensoren in Abhängigkeit von einem Ereignis durchgeführt wird. Sollte es beispielsweise zu einem Ereignis, auch während der Software-aktualisierung kommen, so kann weiterhing eine entsprechende Notsteuerung der Maschine durchgeführt werden. Insbesondere kann somit auch während des Aktualisierens zumindest die Notsteuerung, beispielsweise ein Nothalt der Maschine, realisiert werden. Somit kann die Schaltungsanordnung in sicherheitsrelevanten Bereichen eingesetzt werden. Eine Notsteuerung der Maschine ist somit sichergestellt.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche zumindest eine elektronische Recheneinrichtung dazu veranlassen, wenn die Programmcodemittel von der zumindest einen elektronischen Recheneinrichtung abgearbeitet werden, ein Verfahren nach dem vorhergehenden Aspekt durchzuführen.

Ebenfalls betrifft die Erfindung ein computerlesbares Speichermedium mit einem Computerprogrammprodukt nach dem vorhergehenden Aspekt.

Ein nochmals weiterer Aspekt der Erfindung betrifft eine Schaltungsanordnung zum Aktualisieren einer Softwareversion und für eine Steuerung einer Maschine, mit zumindest einer ersten elektronischen Recheneinrichtung und einer zweiten elektronischen Recheneinrichtung, wobei die Schaltungsanordnung zum Durchführen eines Verfahrens nach dem vorhergehenden Aspekt ausgebildet ist. Insbesondere wird das Verfahren mittels der Schaltungsanordnung durchgeführt.

Ferner betrifft die Erfindung ein Maschinensystem mit zumindest einer Maschine, einer Sicherheitseinrichtung und einer Schaltungsanordnung zum Steuern der Maschine, nach dem vorhergehenden Aspekt.

Vorteilhafte Ausgestaltungsformen des Verfahrens sind als vorteilhafte Ausgestaltungsformen der Schaltungsanordnung des Maschinensystems anzusehen. Die Schaltungsanordnung sowie das Maschinensystem weisen insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

### Dabei zeigen:

- FIG 1: ein schematisches Blockschaltbild gemäß einer Ausführungsform eines Maschinensystems mit einer Ausführungsform einer Schaltungsanordnung;
- FIG 2: ein schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

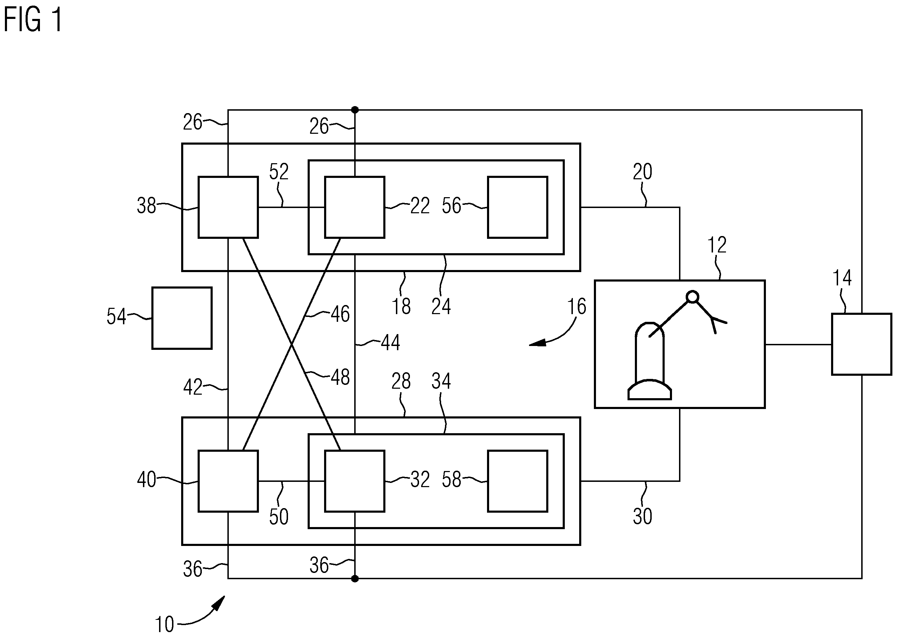

FIG 1 zeigt ein schematisches Blockschaltbild einer Ausführungsform eines Maschinensystems 10. Das Maschinensystem 10 weist zumindest eine Maschine 12, eine Sicherheitseinrichtung 14 sowie eine Schaltungsanordnung 16 auf.

Die Schaltungsanordnung 16 ist für eine Steuerung der Maschine 12 ausgebildet. Die Schaltungsanordnung 16 weist zumindest eine erste elektronische Recheneinrichtung 18 zum Erzeugen von einem ersten Steuersignal 20 für die Maschine 12 auf. Die erste elektronische Recheneinrichtung 18 weist einen internen ersten Datensensor 22, insbesondere für eine erste Steuerungsfunktion 24 zum Erzeugen des Steuersignals 20, auf. Ferner ist der erste interne Datensensor 22 zum Erzeugen eines ersten Sicherheitssignals 26 für die Sicherheitseinrichtung 14 ausgebildet.

Es ist vorgesehen, dass die Schaltungsanordnung 16 eine zweite elektronische Recheneinrichtung 28 aufweist, welche zum Erzeugen von einem zweiten Steuersignal 30 für die Maschine 12 ausgebildet ist, wobei die zweite elektronische Recheneinrichtung 28 einen internen zweiten Datensensor 32, insbesondere für eine zweite Steuerungsfunktion 34, und zum Erzeugen eines zweiten Sicherheitssignals 36 für die Sicherheitseinrichtung 14 aufweist, wobei die erste elektronische Recheneinrichtung 18 einen externen zweiten Datensensor 38 aufweist, welcher mit dem internen zweiten Datensensor 32 gekoppelt ist und wobei die zweite elektronische Recheneinrichtung 28 einen externen ersten Datensensor 40 aufweist, welcher mit dem internen ersten Datensensor 22 gekoppelt ist, und wobei ein jeweiliges Sicherheitssignal 26, 36 zusätzlich von dem externen ersten Datensensor 40 und/oder dem externen zweiten Datensensor 38 erzeugbar ist.

Insbesondere zeigt somit die FIG 1 ebenfalls, dass der erste externe Datensensor 40 und der externe zweite Datensensor 38 über eine Kommunikationsverbindung 42 miteinander gekoppelt sind. Des Weiteren kann die erste elektronische Recheneinrichtung 18 und die zweite elektronische Recheneinrichtung 28 über eine weitere Kommunikationsverbindung 44 miteinander gekoppelt sein. Ferner zeigt die FIG 1, dass der externe zweite Datensensor 38 über einen ersten Kommunikationslink 46 mit dem internen zweiten Datensensor 32 gekoppelt ist und der externe erste Datensensor 40 mit dem internen ersten Datensensor 22 über einen weiteren Kommunikationslink 48 gekoppelt ist. Ferner sind Verbindungen 50 und 52 gezeigt, welche die jeweiligen internen Datensensoren 22, 32 mit den externen Datensensoren 38, 40 verbinden.

Im folgenden Ausführungsbeispiel kann insbesondere vorgesehen sein, dass die erste elektronische Recheneinrichtung 18 als primäre Steuerungseinrichtung für die Maschine 12 ausgebildet ist.

Der interne erste Datensensor 22 ist dabei insbesondere zum Überwachen des Betriebs der ersten elektronischen Recheneinrichtung 18 ausgebildet und/oder der interne zweite Datensensor 32 ist zum Überwachen des Betriebs der zweiten elektronischen Recheneinrichtung 28 ausgebildet. Des Weiteren kann der externe zweite Datensensor 38 zum Überwachen des Betriebs der ersten elektronischen Recheneinrichtung 18 ausgebildet sein und/oder der externe erste Datensensor 40 zum Überwachen des Betriebs der zweiten elektronischen Recheneinrichtung 28 ausgebildet sein.

Ferner kann vorgesehen sein, dass die Datensensoren 22, 32, 38, 40 zum Durchführen eines Testprogramms für die erste elektronische Recheneinrichtung 18 und/oder die zweite elektronische Recheneinrichtung 28 ausgebildet sind.

Insbesondere zeigt somit die FIG 1, dass eine Steuerungsfunktion 24, 34 jeweils von der ersten elektronischen Recheneinrichtung 18 und/oder von der zweiten elektronischen Recheneinrichtung 28 eingesetzt und ausgeführt werden. Da es sich dabei um zwei Instanzen der Steuerungsfunktion 24, 34 handelt, verhalten sich die erste elektronische Recheneinrichtung 18 und die zweite elektronische Recheneinrichtung 28 im Wesentlichen identisch, wenn alles andere unverändert bleibt.

Dabei kann beispielsweise die erste elektronische Recheneinrichtung 18 als primäre Kontrollinstanz ausgebildet sein. Die primäre Kontrollinstanz steuert dabei die Umgebung der Steuerungsfunktionen 24, 34 über eine entsprechende Aktorverbindung, die aktiv ist, zur Maschine. Die sekundäre Kontrollinstanz, vorliegend insbesondere die zweite elektronische Recheneinrichtung 28, ist dabei inaktiv. Es kann jeweils nur die jeweilige Verbindung des Primärteils aktiv sein. Unter speziellen Konditionen kann die entsprechende Verbindung des Primärbauteils inaktiv werden.

Für die Implementierung der elektronischen Recheneinrichtungen 18, 28 können zwei vergleichsweise günstige Standard Industrie Hardware mit handelsüblicher Hardware und Software verwendet werden.

Die externen Datensensoren 38, 40 sind mit den jeweiligen internen Datensensoren 22, 32 verschränkt. Diese Datensensoren 22, 32, 38, 40 bilden wiederum das sogenannte Rückgrat eines verteilten Sicherheitsmonitors, wie dies insbesondere der Schaltungsanordnung 16 entspricht, mit den zwei redundanten Notverbindungen zur Sicherheitseinrichtung 14.

Die Schaltungsanordnung 16 erkennt und behandelt ein Ausfallen oder fehlerhafte Prozesse, Prozesskommunikationsverbindungen und Rechenknoten. Die Schaltungsanordnung 16 weist dabei redundante und unabhängige interne Datensensoren 22, 32 auf, die insbesondere in den elektronischen Recheneinrichtungen 18, 28 eingebaut sind und dort ausgeführt werden. Ferner weist die Schaltungsanordnung 16 redundante und unabhängige externe Datensensoren 38, 40 auf, die als separate, autonome, reine Sensorprozesse ausgeführt werden. Ferner können beispielsweise der externen zweite Datensensor 38 mit dem internen ersten Datensensor 22, und der externe erste Datensensor 40 mit dem internen zweiten Datensensor 32 verschränkt sein, insbesondere lateral, also auf derselben elektronischen Recheneinrichtung 18, 28 sowie auch zwischen den verschiedenen unabhängigen elektronischen Recheneinrichtungen 18, 28. Die Datensensoren 22, 32, 38, 40 sind dabei insbesondere derart miteinander verschränkt, um deren Überwachungsfunktion auszutauschen und sich gegenseitig zu überwachen, zum Beispiel um die Verfügbarkeit und den Gesundheitszustand des Peers zu überwachen und zu vergleichen, ähnlich wie auch die elektronischen Recheneinrichtungen 18, 28 sich gegenseitig überwachen. Ferner sind die entsprechenden Notverbindungen zur Sicherheitseinrichtung 14 vorgesehen.

Die internen Datensensoren 22, 32 überwachen den Betrieb der elektronischen Recheneinrichtungen 18, 28, indem sie Datenelemente, die sich auf die Steuerungsfunktionsinstanzen oder ihre Betriebsmittel beziehen, überwachen und von Fall zu Fall ändern. Die internen Datensensoren 22, 32 implementieren dabei insbesondere Testprogramme. Ferner können auch die externen Datensensoren 38, 40 Testprogramme implementieren, jedoch in dedizierten, unabhängigen Überwachungsprozessen auf verschiedenen elektronischen Recheneinrichtungen 18, 28. Der externe erste Datensensor 40 überwacht dabei wiederum die erste Steuerungsfunktion 24 und der externe zweite Datensensor 38 überwacht die zweite Steuerungsfunktion 34. Diese Überwachung erfolgt wiederum über die entsprechenden internen Datensensoren 22, 32. Mit anderen Worten erfolgt die Überwachung der ersten Steuerungsfunktion 24 mittels des externen ersten Datensensors 40 über den ersten internen Datensensor 22 und die Überwachung der zweiten Steuerungsfunktion 34 erfolgt wiederum mittels des externen ersten Datensensors 38 über den internen zweiten Datensensor 32.

Die externen Datensensoren 38, 40 vergleichen wiederum ihre Systemsichten, um beispielsweise bei Systeminkonsistenzen oder Komponentenausfällen durch ausfallende Datensensoren 22, 32, 38, 40 zu erkennen und entsprechende Gegenmaßnahmen einzuleiten. Im Falle eines drohenden Schadens, wenn beispielsweise die primäre Steuerungsfunktion nicht ordnungsgemäß reagiert, kann die Schaltungsanordnung 16 versuchen, auf die sekundäre Steuerungsfunktion, mit anderen Worten auf die zweite elektronische Recheneinrichtung 28, umzuschalten, oder als letztes Mittel auch die Sicherheitseinrichtung 14 anzusteuern, und beispielsweise einen Notstopp initiieren.

Die Schaltungsanordnung 16 muss dabei insbesondere voll funktionsfähig sein, um den Lebenszyklus der sicherheitsrelevanten Steuerungsinstanz vollständig abzudecken, einschließlich entsprechender Upgrades und Downgrades. Im Normalfall überdauert die Schaltungsanordnung 16 die Steuerungsfunktionsinstanzen, das heißt die Schaltungsanordnung 16 ist vor und nach den Steuerungsfunktionsinstanzen betriebsbereit. Dies kann beispielsweise nachfolgend für Startsequenzen veranschaulicht werden.

Die Startsequenz einer einfach abgedeckten Steuerungsfunktion 24, 34, das heißt einer Steuerungsfunktion 24 mit der ersten elektronischen Recheneinrichtung 18, ist, dass der externe erste Datensensor 40 mit aktivierter Notverbindung zuerst gestartet wird. Dann startet der interne erste Datensensor 32 bei aktiver Notverbindung und bei aktivierter seitlicher Sensor-Datenverbindung, mit anderen Worten den Verbindungen 52 und 48. Der interne erste Datensensor 22 meldet sich dann bei dem bereits laufenden externen zweiten Datensensor 40 an. Die Systemsteuerungslogik in der ersten Steuerungsfunktion 24 startet nun mit aktivierter weiterer Kommunikationsverbindung 44 zwischen den beiden elektronischen Recheneinrichtung 18 und 28.

Die Startsequenz einer doppelt abgedeckten, redundanten Steuerungsfunktion, das heißt einer Steuerungsfunktion mit zwei Steuerungsfunktionsinstanzen ist wie folgt: Die beiden externen Datensensoren 38, 40 werden mit der entsprechenden Notfunktion gestartet. Im Anschluss daran erfolgt das Starten der internen Datensensoren 22, 32 sowie deren entsprechenden Verbindungen. Die internen Datensensoren 22, 32 melden sich bei den bereits externen Datensensoren 38, 40 an. Die Systemsteuerungslogik beginnt, insbesondere aktiv die erste Steuerungsfunktion 24 auf die Maschine 12 anzuwenden. Die Notfallverbindungen von den Datensensoren 22, 32, 38, 40, die direkt der primären Kontrollinstanz zugeordnet sind, werden aktiviert.

In jedem Systemzyklus müssen die kritischen Daten, die in redundanten Steuerungsinstanzen abgefragt werden, das heißt die Daten, die in Probepunkten gekapselt sind, das heißt die Daten, die in den Datensensoren 22, 32, 38, 40 gekapselt sind und von den Datensensoren 22, 32, 38, 40 in jedem Systemzyklus überprüft und verglichen werden, gleich sein. Wenn kritische Daten nach einer bestimmten Zeit, die von dem Steuerungssystem, der Steuerungsfunktion 24, 34 und der sich ändernden Systemumgebung abhängt, nicht übereinstimmen, dann betätigt einer der Datensensoren 22, 32, 38, 40 beispielsweise die Sicherheitseinrichtung 14 in dieser Reihenfolge: Primärer Datensensor vor sekundärer Datensensor, interner Datensensor 22, 32 vor externem Datensensor 38, 40. Im Falle eines Problems der Schaltungsanordnung 16 kann die Steuerungsfunktion anhalten oder in einen verschlechterten Betriebsmodus übergehen.

Bei dem in der FIG 1 dargestellten Aufbau wird ein einzelner Fehlerpunkt wie folgt behandelt. Sollte beispielsweise die zweite Steuerungsfunktion 34 ausfallen, läuft immer noch die erste Steuerungsfunktion 24, einschließlich des internen ersten Datensensors 22 und des externen ersten Datensensors 40.

Fällt die zweite elektronische Recheneinrichtung 28 mit der zweiten Steuerungsfunktion 34 und dem externen ersten Datensensor 40 aus, so läuft noch die erste elektronische Recheneinrichtung 18 mit der ersten Steuerungsfunktion 24. Der sekundäre, im Bereitschaftszustand befindliche externe zweite Datensensor 38 wird zuvor zum primären externen Datensensor.

Wenn die primäre Steuerungsfunktion 24 ausfällt, wird insbesondere im Hot-Stand by-Modus die zweite elektronische Recheneinrichtung 28 zugeschaltet und sofort zum primären Steuerungskreis. Der zugehörige externe zweite Datensensor 38 wird sofort zum primären externen Datensensor. Die entsprechenden Funktionen für die Sicherheitseinrichtung 14 sind weiterhin verfügbar.

Wenn die erste elektronische Recheneinrichtung 18 mit der ersten Steuerungsfunktion 24 und dem externen zweiten Datensensor 38 ausfällt, dann läuft weiterhin noch die zweite elektronische Recheneinrichtung 28 mit der zweiten Steuerungsfunktion 34, die sofort zur primären Kontrollinstanz wird. Die entsprechenden Notfallinstanzen für die Sicherheitseinrichtung 14 sind weiterhin verfügbar.

Fällt einer der externen Datensensoren 38, 40 aus, gibt es immer noch die gleichrangigen externen Datensensoren 38, 40, die entweder der primäre ist, beispielsweise der externe zweite Datensensor 40 beim Ausfall des externen ersten Datensensors 38 oder umgekehrt, wobei sofort der noch verfügbare zum primären Datensensor wird.

Wenn alle redundanten Verbindungen für die Steuersignale 20, 30 oder eine der redundanten Notverbindungen ausfällt, funktioniert die entsprechende Gegenverbindung noch. Diese Ausfälle können wie Ausfälle der Prozesse, beispielsweise Steuerungsfunktionsinstanzen oder externe Datensensoren 38, 40, behandelt werden, die diese Verbindungen kontrollieren.

Fällt eine der Sensordatenverbindungen aus, erreichen die Sensordaten ihr Ziel über eine redundante Kommunikationsverbindung. Alternativ können die Sensordaten über eine andere Kommunikationsverbindung umgeleitet werden, vorausgesetzt, die für die Sensordatenkommunikation gesperrten Kommunikationsressourcen sowie die Datenlaufzeit sind ausreichend.

Sollte beispielsweise der interne erste Datensensor 22 ein fatales Programm auf der ersten Steuerungsfunktion 24 feststellen, kann der interne erste Datensensor 22 einen entsprechenden Notstopp initiieren. Wenn der externe erste Datensensor 40 ein fatales Programm in der ersten Steuerungsfunktion 24 feststellt, das aus globaler Sicht betrachtet untragbar ist, zum Beispiel unter Berücksichtigung des Zustands von der zweiten Steuerungsfunktion 24, der Betriebsbedingungen und der Gesundheit der entsprechenden elektronischen Recheneinrichtung 28, so kann der externe zweite Datensensor 40 eine Notfunktion auslösen.

Primäre Instanzen reagieren vor sekundären Instanzen und interne Datensensoren 22, 32 können vor externen Datensensoren 38, 40 reagieren.

Nach einem kritischen Ausfall läuft die entsprechende Steuerungsfunktion für einen bestimmten Zeitraum im degradierten Betriebsmodus. Eine sicherheitsrelevante Steuerungsfunktion im degradierten Modus sollte nicht aufgerüstet oder heruntergestuft werden.

Die externen Datensensoren 38, 40 und die internen Datensensoren 22, 32 führen ein oder mehrere Testprogramme aus und verwenden dabei die Betriebsmittel, die ausschließlich für Datentestoperationen verfügbar und gesperrt sind. Ein Prüfprogramm ist dabei wiederum ein Testprogramm, welches auch als Testplan bezeichnet werden kann, das statisch vor der Ausführung des Steuerungssystems, oder dynamisch während der Laufzeit des Steuerungssystems, verknüpft werden kann. Prüfprogramme arbeiten an Prüfpunkten auf der Anwendungsebene und/oder auf der Systemebene, um wichtige Steuerungsfunktionen zu prüfen und zu vergleichen und um Leistungsindikatoren, beispielsweise den Gesundheitszustand, zu ermitteln.

Ferner zeigt die Figur 1 eine Empfangseinrichtung 54, eine erste Speichereinrichtung 56 der ersten elektronischen Recheneinrichtung 18 sowie eine zweite Speichereinrichtung 58 der zweiten elektronischen Recheneinrichtung 28.

Insbesondere zeigt somit die Figur 1, wie eine Aktualisierung einer sicherheitsrelevanten Steuerungsfunktion, insbesondere den Steuerungsfunktionen 24, 34, durchgeführt werden kann, die zur Systemlaufzeit auf dem redundanten Standard Industrie Hardware ausgeführt werden kann. Dabei findet insbesondere ein Vergleichsmechanismus statt, der vor einer Aktualisierung die Ergebnisse der Steuerinstanzen entsprechend vergleicht.

Im Falle von fehlgeschlagenen Upgrades kann wiederum die aktuelle Version der Steuerungsfunktionen 24, 34 weiterhin verfügbar sein und bereit sein, die Steuerung für die Maschine 12 zu übernehmen.

Bei den Tests vor der Aktivierung handelt es sich um grundlegende Prüfungen, z. B., ob eine Installation und Einrichtung korrekt durchgeführt wurden, ob die für eine Steuerungsfunktionsversion erforderlichen Komponenten und Kommunikationsverbindungen vorhanden sind und, wie erwartet, funktionieren und ob die Eingänge der Steuerungsfunktionen 24, 34 die erwarteten Eigenschaften aufweisen. Die Testergebnisse vor der Aktivierung beider redundanter Steuerungsfunktionsinstanzen müssen dabei gleich sein, bevor eine neue Steuerungsfunktionsversion aktiviert werden kann, d. h., bevor eine ihrer redundanten Steuerungsfunktionsinstanzen zu neuen Primären werden kann.

Nach erfolgreichem Voraktivierungstest erfolgt ein durchgängig, fließendes Upgrade einer redundant ausgelegten Steuerungsfunktion 24, 34.

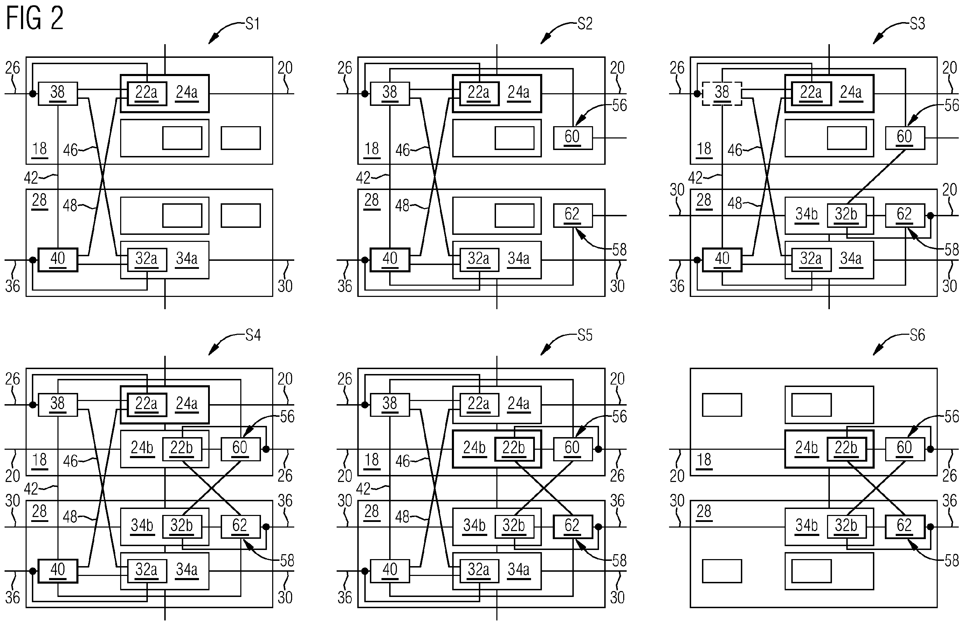

FIG 2 zeigt einen schematisches Ablaufdiagramm gemäß einer Aktualisierung für die Softwareversion. Nachfolgend ist insbesondere die zu aktualisierende/zuvor installierte Softwareversion für die erste Steuerungsfunktion 24 als 24a betitelt und die aktualisierte Softwareversion als Steuerungsfunktion 24b betitelt. Dies ist insbesondere für die erste elektronische Recheneinrichtung 18 der Fall. Für die zweite elektronische Recheneinrichtung 28 ist die zuvor installierte Softwareversion mit 34a betitelt und die aktualisierte Softwareversion mit 34b betitelt. Die zuvor installierte Steuerungsfunktion 24a hat den zuvor installierten internen ersten Datensensor 22a und einen aktualisierten internen ersten Datensensor 22b. Die zuvor installierte Steuerungsfunktion 34a hat den internen zweiten Datensensor 32a die aktualisierte zweite Steuerungsfunktion 34b hat den aktualisierten internen zweiten Datensensor 32b.

In der FIG 2 sind insbesondere die aktiven Komponenten mit einer dicken Linie gekennzeichnet, während die inaktiven Komponenten mit einer dünneren Linie gekennzeichnet sind.

Ferner ist in der FIG 2 insbesondere gezeigt, dass ein neuer weiterer externer Datensensor 60 für die Aktualisierung vorgesehen ist sowie ein neuer nochmals weiterer externer Datensensor 62 für die Aktualisierung vorgesehen ist.

Die FIG 2 zeigt insbesondere sechs Zeitschritte zum Durchführen der Aktualisierung. Diese sechs Zeitschritte sind mit S1 bis S6 bezeichnet.

Insbesondere zeigt somit die FIG 2 ein Verfahren zum Aktualisieren einer Softwareversion für die Steuerungsfunktion für die Steuerungsfunktionen 24a, 24b, 34a, 34b für die Schaltungsanordnung 16 für die Steuerung der Maschine 12 mittels der Schaltungsanordnung 16. Es wird ein Datenpaket zum Aktualisieren der Softwareversion mittels der Empfangseinrichtung 54 der Schaltungsanordnung 16 empfangen. Es erfolgt das Speichern des Datenpakets in der ersten Speichereinrichtung 56 der ersten elektronischen Recheneinrichtung 18 und das Speichern des Datenpakets in der zweiten Speichereinrichtung 58 in der zweiten elektronischen Recheneinrichtung 28. Es erfolgt das Erweitern der ersten elektronischen Recheneinrichtung 18 mit dem weiteren externen Datensensor 60 und das Erweitern der zweiten elektronischen Recheneirichtung 28 mit dem nochmals weiteren externen Datensensor 62. Die Softwareversion zum Aktualisieren wird mittels des weiteren externen Datensensors 60 und des nochmals weiteren Datensensors 62 freigegeben. Die Softwareversion wird auf der zweiten elektronischen Recheneinrichtung 28 in Abhängigkeit von der Freigabe des nochmals weiteren Datensensors 62 aktualisiert und die Softwareversion wird auf der ersten elektronischen Recheneinrichtung 18 in Abhängigkeit von der Freigabe des weiteren Datensensors 60 aktualisiert.

Insbesondere zeigt somit die FIG 2, dass in einem ersten Schritt S1 die zuvor installierte erste Steuerungsfunktion 24a die Steuerung der Maschine 12 übernimmt. Der zuvor installierte interne erste Datensensor 22a sowie der zuvor installierte externe erste Datensensor 40 übernimmt dabei die die Steuerung und Überwachung der Maschine 12. Im zweiten Schritt S2 erfolgt das Empfangen des Datenpakets. Hierbei kann ein Vorab-Test im zweiten Schritt S2 durch den weiteren externen Datensensor 60 sowie den nochmals weiteren externen Datensensor 62 durchgeführt werden.

Im dritten Schritt S3 ist nun vorgesehen, dass parallel zur zuvor installierten zweiten Steuerungsfunktion 34a die aktualisierte zweite Steuerungsfunktion 34b installiert bzw. aktualisiert wird. Eine Kontrolle der aktualisierten zweiten Steuerungsfunktion 34b wird dabei über die neuen externen Datensensoren 60, 62 durchgeführt. Es ist weiterhin vorgesehen, dass die zuvor installierte erste Steuerungsfunktion 24a die Steuerung der Maschine 12 übernimmt.

Im vierten Schritt S4 erfolgt wiederum nach erfolgreicher Installation der aktualisierten zweiten Steuerungsfunktion 34b die Installation der aktualisierten ersten Steuerungsfunktion 24b. Die Steuerung erfolgt dabei weiterhin über die zuvor installierte erste Steuerungsfunktion 24a. Insbesondere ist gezeigt, dass im vierten Schritt S4 sowohl die zuvor installierte erste Steuerungsfunktion 24a, die zuvor installierte zweite Steuerungsfunktion 34a, die aktualisierte erste Steuerungsfunktion 24b sowie die aktualisierte zweite Steuerungsfunktion 34b in der Schaltungsanordnung 16 vorhanden ist.

Im fünften Schritt S5 ist gezeigt, dass die Steuerungsfunktionen 24a, 24b, 34a, 34b auch in den elektronischen Recheneinrichtungen 18, 28 vorhanden sind. Jedoch ist nun vorgesehen, dass die Steuerung der Maschine 12 über die aktualisierte erste Steuerungsfunktion 24b durchgeführt wird. Hierzu werden die neuen internen ersten Datensensoren 22b sowie der neue externe erste Datensensor 62 zur Überwachung verwendet.

Im sechsten Schritt S6 ist wiederum gezeigt, dass vorgesehen sein kann, dass nach dem Aktualisieren der Softwareversion die zuvor installierte Softwareversion von der ersten elektronischen Recheneinrichtung 18 und/oder der zweiten elektronischen Recheneinrichtung 28 gelöscht wird.

Insbesondere zeigt somit die FIG 2 im ersten Schritt S1, dass ein Aktivlink zur Maschine 12 über die zuvor installierte erste Steuerungsfunktion 24a durchgeführt wird, während alle anderen Verbindungen zur Maschine 12 inaktiv sind. Zwei aktive Notverbindungen 26, 36 werden wiederum vom internen ersten Datensensor 22a ausgeführt. Die zuvor installierte erste Steuerungsfunktion 24a sowie der externe erste Datensensor 40 werden dabei auf physisch unterschiedlichen elektronischen Rechnereinrichtungen 18, 28 bereitgestellt, um die Unabhängigkeit zu erhöhen, und diese tauschen wiederum entsprechenden Überwachungsdaten über Verbindungen 46 aus.

Während des Aktualisierungsprozesses ist insbesondere vorgesehen, dass die Schaltungsanordnung 16 die internen und externen Datensensoren 22, 32, 38, 40, 60, 62 kontinuierlich überwacht. Insbesondere werden bei dieser auf anwendungsunabhängige Eigenschaften für eine sichere nahtlose Aktualisierung der Steuerungssystemfunktionen überprüft. Ferner werden anwendungsunabhängige Eigenschaften zur Steuerungsfunktion 24, 34, wie z. B. die Kontinuität von Funktionseingangswert und Funktionsausgangswert überwacht.

Ein reibungsloser Wechsel von der zu aktualisierenden Software-Funktion erfolgt dabei, wie in FIG 2 dargestellt. Das Verfahren beginnt im ersten Schritt S1, wobei hierbei die zuvor installierte erste Steuerungsfunktion 24a und die zuvor installierte zweite Steuerungsfunktion 34a vorhanden sind. Die Konfiguration in der Startphase ist insbesondere, wie in der FIG 1 dargestellt. Zusätzlich sind entsprechende Betriebsmittel, insbesondere Slots, für die nächste, redundante Steuerungsfunktionsversion mit entsprechenden zugehörenden weiteren externen Datensensoren 60, 62 gesperrt und werden auch nicht verwendet.

Im zweiten Schritt S2 werden über die neuen externen Datensensoren 60, 62 die Datenpakete entsprechend eingegeben und geben diese frei. Nun kann ein Selbsttest durchgeführt werden, und bei Erfolg wird der Schaltungsanordnung 16 mitgeteilt, dass eine Aktualisierung durchgeführt werden kann.

Im dritten Schritt S3 erfolgt die Bereitstellung und die Freigabe der aktualisierten Software-Funktion auf der zweiten elektronischen Recheneinrichtung 28 im sogenannten Hot-Standby. Die aktualisierte zweite Steuerungsfunktion 34b beginnt mit der Durchführung von den Vorab-Aktivierungstests, insbesondere mittels den aktualisierten internen Datensensoren 32b, wobei die zugehörige Aktorleitung deaktiviert wird. Bei Erfolg wird der vierte Schritt S4 weiter fortgeführt.

Im vierten Schritt S4 erfolgt das Bereitstellen und Freigeben der zweiten elektronischen Recheneinrichtung 28 für die aktualisierte Version. Es wird hierbei dann die Freigabe für die erste elektronische Recheneinrichtung 18 erteilt, die entsprechende Aktualisierung durchzuführen. Die zuvor installierte erste Steuerungsfunktion 24a wird mit der aktuellen ersten Steuerungsfunktion 24b zusammengeführt. Die zuvor installierte erste Steuerungsfunktion 24a und die aktualisierte zweite Steuerungsfunktion 34b laufen dabei parallel und führen bei entsprechend gesperrten Aktorleitungen identische Voraktivierungstests durch. Es werden dabei die Vorabschalttests mittels der Schaltungsanordnung 16 auf Regression durchgeführt und somit ein Vergleichsmechanismus durchgeführt. Wenn die Vergleichsergebnisse gleich sind, sind die Tests vor der Aktivierung erfolgreich verlaufen. Die Software-Aktualisierung auf der ersten elektronischen Recheneinrichtung 18 kann somit durchgeführt werden. Wenn die Vergleichsergebnisse ungleich sind, ist auf einem der elektronischen Recheneinrichtung 18, 28 ein Problem aufgetreten. Die Steuerungsfunktion 24, 34 kann nicht aktualisiert werden. Die Ausführung wird damit auf der zuvor installierten ersten Steuerungsfunktion 24a weiterhin durchgeführt und ein Upgrade-Fehler wird ausgelöst.

Im fünften Schritt S5 erfolgt das Aktivieren der aktualisierten ersten Steuerungsfunktion 24b als primäre Steuerinstanz. Die entsprechenden anderen Steuerungsfunktionen übertragen das Recht, die Systemumgebung, insbesondere die Maschine 12, zu steuern. Die redundanten Steuerungsfunktionsinstanzen durchlaufen dieselben Phasen in derselben Reihenfolge auf demselben Rhythmus wie die deaktivierten Stellgliedleitungen. Die Schaltungsanordnung 16 schaltet von der zuvor installierten Softwareversion auf die aktualisierte Softwareversion um, ausgelöst durch die internen Datensensoren 22a, 22b, 32a, 32b, die zusammen mit den sie beherbergenden Steuerungsfunktionen von der zuvor installierten Steuerungsfunktion 24a auf die primäre aktualisierte Steuerungsfunktion 24b umschaltet.

Im sechsten Schritt S6 ist gezeigt, dass die entsprechenden Betriebsmittel von der zuvor installierten Steuerungsfunktion 24a, 34a freigegeben werden unmittelbar, bevor eine weitere Steuerungsfunktion einer nächsten Version die aktualisierte Steuerungsfunktion 24b, 34b ersetzen soll. Bis dahin kann wiederum auch vorgesehen sein, dass die zuvor installierte Steuerungsfunktion 24a, 34b in Bereitschaft bleibt und als Fallback fungiert, wenn diese für das Steuersystem und die kontrollierten Maschine 12 angemessen und sicher ist.

Alternativ läuft die Schaltungsanordnung 16 nicht mit verteilten, kreuz und quer angeordneten Datensensoren 22, 32, 38, 40 auf den elektronischen Recheneinrichtungen 18, 28, sondern auf einem unabhängigen Dashboard-Knoten, wo ein Systembediener die Aktualisierung der Steuerungsfunktion 24, 34 auslöst und überwacht, oder auf einem dritten, dezidierten Rechenknoten, z. B. einem dezidierten Mikrocontroller oder einem anderen Industrie-PC.

Ein Downgrade von beispielsweise der aktualisierten Softwareversion auf die zuvor installierte Software-Funktion erfolgt nach dem gleichen Prinzip wie die Aktualisierung selbst. Dabei kann ein Ereignis die Herabstufung initiieren. Bei diesem Ereignis kann es sich z. B. um einen Tastendruck eines autorisierten Systembetreibers über einen Dashboard-Knoten handeln oder um einen Leistungsabfall unter einen ordentlichen Schwellwert aufgrund einer Änderung der Steuerungsfunktionen 24, 34, die Herabstufungen nahelegt, wenn nicht sogar ein Upgrade auf eine andere Version. Die Schaltungsanordnung 16 erkennt dabei den Leistungsabfall durch beispielsweise einen Gesundheitstest und leitet wiederum das Downgrade ein. Dabei wird die Herabstufung entsprechend überwacht. Das Downgrade beginnt ebenfalls mit den Voraktivierungstests auf der zweiten elektronischen Recheneinrichtung 28. Nach dem Upgrade führen die entsprechenden Steuerinstanzen das Downgrade durch.

## Patentansprüche

1. Verfahren zum Aktualisieren einer Softwareversion für eine Steuerungsfunktion (24) für eine Schaltungsanordnung (16) für eine Steuerung einer Maschine (12) mittels der Schaltungsanordnung (16), mit den Schritten:
- Empfangen eines Datenpakets zum Aktualisieren der Softwareversion mittels einer Empfangseinrichtung (54) der Schaltungsanordnung (16);
- Speichern des Datenpakets in einer ersten Speichereinrichtung (56) einer ersten elektronischen Recheneinrichtung (18) der Schaltungsanordnung (16) und Speichern des Datenpakets in einer zweiten Speichereinrichtung (58) einer zweiten elektronischen Recheneinrichtung (28) der Schaltungsanordnung (16);
- Erweitern der ersten elektronischen Recheneinrichtung (18) mit einem weiteren externen Datensensor (60) und Erweitern der zweiten elektronischen Recheneirichtung (28) mit einem nochmals weiteren externen Datensensor (62);
- Freigeben der Softwareversion zum Aktualisieren mittels des weiteren externen Datensensors (60) und des nochmals weiteren externen Datensensors (62);
- Aktualisieren der Softwareversion auf der zweiten elektronischen Recheneinrichtung (28) in Abhängigkeit von der Freigabe des nochmals weiteren externen Datensensors (62); und
- Aktualisieren der Softwareversion auf der ersten elektronischen Recheneinrichtung (18) in Abhängigkeit von der Freigabe des weiteren externen Datensensors (60).

2. Verfahren nach Anspruch 1, **dadurch gekennzeichnet, dass** die erste elektronische Recheneinrichtung (18) als Primärsteuerungseinrichtung für die Maschine (12) bereitgestellt wird.

3. Verfahren nach Anspruch 2, **dadurch gekennzeichnet, dass** während der Aktualisierung der ersten elektronischen Recheneinrichtung (18) die Steuerung der Maschine (12) weiterhin von der ersten elektronischen Recheneinrichtung (18) durchgeführt wird.

4. Verfahren nach einem der vorhergehenden, **dadurch gekennzeichnet, dass**
in einem Fehlerfall der ersten elektronischen Recheneinrichtung die Steuerung der Maschine mittels der zweiten elektronischen Recheneinrichtung durchgeführt wird.

5. Verfahren nach einem der vorhergehenden Ansprüche, **dadurch gekennzeichnet, dass**
zeitlich vor dem Aktualisieren das Datenpaket mittels einem jeweiligen Datensensor (22, 32, 38, 40, 60, 62) von der ersten elektronischen Recheneinrichtung (18) und/oder der zweiten elektronischen Recheneinrichtung (28) überprüft wird.

6. Verfahren nach einem der vorhergehenden Ansprüche, **dadurch gekennzeichnet, dass**
nach dem Aktualisieren der Softwareversion die zuvor installierte Softwareversion von der ersten elektronischen Recheneinrichtung (18) und/oder der zweiten elektronischen Recheneinrichtung (28) gelöscht wird.

7. Verfahren nach einem der Ansprüche 1 bis 5, **dadurch gekennzeichnet, dass**
nach dem Aktualisieren der Softwareversion die zuvor installierte Softwareversion als Rückfallversion von der ersten elektronischen Recheneinrichtung (18) und/oder der zweiten elektronischen Recheneinrichtung (28) gespeichert wird.

8. Verfahren nach einem der vorhergehenden Ansprüche, **dadurch gekennzeichnet, dass**
während der Softwareaktualisierung der zweiten elektronischen Recheneinrichtung (18) eine erste Steuerungsfunktion (24) zum Steuern der Maschine (12) mittels eines internen ersten Datensensors (22) der ersten elektronischen Recheneinrichtung (18) und mittels eines externen ersten Datensensors (40) der zweiten elektronischen Recheneinrichtung (28) überwacht wird.

9. Verfahren nach einem der vorhergehenden Ansprüche, **dadurch gekennzeichnet, dass**
während der Softwareaktualisierung der ersten elektronischen Recheneinrichtung (18) eine zweite Steuerungsfunktion (34) zum Steuern der Maschine (12) mittels eines internen zweiten Datensensors (32) der zweiten elektronischen Recheneinrichtung (28) und mittels eines externen zweiten Datensensors (38) der ersten elektronischen Recheneinrichtung (18) überwacht wird.

10. Verfahren nach einem der Ansprüche 8 oder 9, **dadurch gekennzeichnet, dass**
der externe erste Datensensor (40) und der externe zweite Datensensor (40) über eine Kommunikationsverbindung (42) miteinander gekoppelt sind.

11. Verfahren nach einem der Ansprüche 8 bis 10, **dadurch gekennzeichnet, dass**
die erste elektronische Recheneinrichtung (18) und die zweite elektronische Recheneinrichtung (28) über eine weitere Kommunikationsverbindung (44) miteinander gekoppelt sind.

12. Verfahren nach einem der Ansprüche 8 bis 11, **dadurch gekennzeichnet, dass**
eine Notsteuerung für die Maschine (12) mittels einer der Datensensoren (22, 32, 38, 40, 60, 62) in Abhängigkeit von einem Ereignis durchgeführt wird.

13. Computerprogrammprodukt mit Programmcodemitteln, welche zumindest eine elektronische Recheneinrichtung (18, 28) dazu veranlassen, wenn die Programmcodemittel von der zumindest einen elektronischen Recheneinrichtung (18, 28) abgearbeitet werden, ein Verfahren nach einem der Ansprüche 1 bis 12 durchzuführen.

14. Computerlesbares Speichermedium mit einem Computerprogrammprodukt nach Anspruch 13.

15. Schaltungsanordnung (16) zum Aktualisieren einer Softwareversion und für eine Steuerung einer Maschine (12), mit zumindest einer ersten elektronischen Recheneinrichtung (18) und einer zweiten elektronischen Recheneinrichtung (28), wobei die Schaltungsanordnung (16) zum Durchführen eines Verfahrens nach einem der Ansprüche 1 bis 12 ausgebildet ist.
